# EUROPEAN PATENT SPECIFICATION

(11) **EP 2 442 043 B1**
(45) Date of publication and mention of the grant of the patent: **18.10.2017**
(21) Application number: 10785956.3
(22) Date of filing: 09.06.2010
(51) Int. Cl.: F25B 49/02, F25B 13/00

(54) **FREEZER DEVICE**
TIEFKÜHLVORRICHTUNG
DISPOSITIF DE CONGÉLATEUR

(30) Priority: 12.06.2009 JP 2009141206
(43) Date of publication of application: 18.04.2012
(73) Proprietor: Daikin Industries, Ltd., Osaka 530-8323 (JP)
(72) Inventor: MAKINO, Tatsuya, Sakai-shi Osaka 591-8511 (JP)
(74) Representative: Hoffmann Eitle
(86) International application number: PCT/JP2010/003840
(87) International publication number: WO 2010/143424

(56) References cited:
- EP-A1- 1 496 317
- WO-A1-2009/047906
- JP-A- 6 159 857
- JP-A- 7 091 717
- JP-A- 10 030 853
- JP-A- 10 148 378
- JP-A- H10 148 378
- JP-A- 2009 299 914
- US-A- 5 144 812
- US-A- 5 385 030

## Description

### TECHNICAL FIELD

The present invention relates to a refrigeration apparatus.

### BACKGROUND ART

In the conventional art, an air conditioner has been proposed wherein various equipment is controlled for the purpose of improving COP. For example, in a control apparatus of an air conditioner disclosed in JP H10-30853H), the airflow of an outdoor fan is controlled such that a COP suitable for the outdoor temperature is obtained. A refrigeration apparatus having the features defined in the preamble of claim 1 is known from JP-A-10-148378. EP 1 496 317 A1 discloses a refrigeration apparatus in which the rotational speed of the fan is adapted to prevent a high/low pressure difference from decreasing or increasing. US 5605053 describes a utilization side heat exchanger load based condenser fan control.

### SUMMARY OF THE INVENTION

### <Technical Problem>

In the air conditioner disclosed in JP H10-30853 H , control of the outdoor fan is performed such that COP improves during cooling operation.

However, given the energy conservation measures and the like taken in recent years, it is preferable that control to improve COP is performed also during other operation modes (e.g., during heating operation).

Accordingly, it is an object of the present invention to provide a refrigeration apparatus that can control an outdoor fan such that COP improves even under different usage conditions.

### <Solution to Problem>

A refrigeration apparatus according to the invention comprises the features of claim 1.

Here, for example, the refrigeration apparatus is an air conditioner. In addition, here, for example, the amount of ventilation of the ventilation fan is such that the COP of the refrigeration apparatus is made suitable.

In the refrigeration apparatus according to the invention, the amount of ventilation of the ventilation fan can be controlled such that the COP improves by controlling the output of the ventilation fan based on the amount of ventilation of the ventilation fan corresponding to the load, even if the usage condition of the refrigeration apparatus is different. In addition, by calculating the amount of ventilation of the ventilation fan corresponding to the load from the relational expression the amount of ventilation of the ventilation fan can be calculated accurately while omitting the trouble of inputting the load information.

In a refrigeration apparatus according to an aspect of the invention the controlling means calculates the load based on a difference between the temperature of the outdoor air and the temperature of the heat source side heat exchanger.

In the refrigeration apparatus according to this aspect of the invention, the load is calculated based on the difference between the temperature of the outdoor air and the temperature of the heat source side heat exchanger, and the output of the ventilation fan is controlled. Thereby, for example, even if the temperature of the outdoor air fluctuates, the amount of ventilation of the ventilation fan can be controlled more finely by controlling the output of the ventilation fan based on the difference between the temperature of the outdoor air and the temperature of the heat source side heat exchanger.

In a refrigeration apparatus according to an aspect of the invention the controlling means calculates the load by subtracting one temperature selected from the group consisting of the temperature of the outdoor air and the temperature of the heat source side heat exchanger from the other.

In the refrigeration apparatus according to this aspect of the invention, for example, even if the temperature of the outdoor air fluctuates, the amount of ventilation of the ventilation fan can be controlled more finely by controlling the output of the ventilation fan based on the difference between the temperature of the outdoor air and the temperature of the heat source side heat exchanger.

In a refrigeration apparatus according to an aspect of the invention the heat exchanging temperature detecting means is a condensation temperature detecting means that detects a condensation temperature of the heat source side heat exchanger in a state wherein the refrigerant circuit is operating in the cooling cycle.

In the refrigeration apparatus according to this aspect of the invention, in the heat source side heat exchanger, heat is exchanged during cooling operation between the refrigerant flowing through the interior of the heat source side heat exchanger and the outdoor air. Namely, the heat source side heat exchanger functions as a condenser of the refrigerant. Thereby, an appropriate load can be calculated by detecting the outdoor air temperature and the condensation temperature of the heat source side heat exchanger.

In a refrigeration apparatus according to an aspect of the invention the heat exchanging temperature detecting means is an evaporation temperature detecting means that detects an evaporation temperature of the heat source side heat exchanger in a state wherein the refrigerant circuit is operating in the heating cycle.

In the refrigeration apparatus according to this aspect of the invention, in the heat source side heat exchanger, heat is exchanged during heating operation between the refrigerant flowing through the interior of the heat source side heat exchanger and the outdoor air. Namely, the heat source side heat exchanger functions as an evaporator of the refrigerant. Thereby, an appropriate load can be calculated by detecting the outdoor air temperature and the evaporation temperature of the heat source side heat exchanger.

In a refrigeration apparatus according to an aspect of the invention a plurality of the relational expressions are used. Furthermore, the controlling means selects one of the relational expressions from the plurality of the relational expressions based on a divergence of the indoor temperature from the set temperature, and/or a frequency of the compressor, and calculates the amount of ventilation of the ventilation fan corresponding to the load from the one relational expression.

In the refrigeration apparatus according to this aspect of the invention, for example, one relational expression is selected from the plurality of the relational expressions in accordance with the situation, and the ventilation fan can be controlled in accordance with the situation by calculating the amount of ventilation of the ventilation fan corresponding to the load using the selected relational expression.

### <Advantageous Effects of Invention>

In the refrigeration apparatus according to the invention, the amount of ventilation of the ventilation fan can be controlled such that the COP improves by controlling the output of the ventilation fan based on the amount of ventilation of the ventilation fan corresponding to the load, even if the usage condition of the refrigeration apparatus is different.

In the refrigeration apparatus according to an aspect of the invention, the load is calculated based on the difference between the temperature of the outdoor air and the temperature of the heat source side heat exchanger, and the output of the ventilation fan is controlled. Thereby, for example, even if the temperature of the outdoor air fluctuates, the amount of ventilation of the ventilation fan can be controlled more finely by controlling the output of the ventilation fan based on the difference between the temperature of the outdoor air and the temperature of the heat source side heat exchanger.

In the refrigeration apparatus according to an of the invention, for example, even if the temperature of the outdoor air fluctuates, the amount of ventilation of the ventilation fan can be controlled more finely by controlling the output of the ventilation fan based on the difference between the temperature of the outdoor air and the temperature of the heat source side heat exchanger.

In the refrigeration apparatus according to an of the invention, first the load is calculated, and then, by calculating the amount of ventilation of the ventilation fan corresponding to the load from the relational expression between the load and the amount of ventilation of the ventilation fan, the amount of ventilation of the ventilation fan can be calculated accurately while omitting the trouble of inputting the load information.

In the refrigeration apparatus according to an aspect of the invention, in the heat source side heat exchanger, heat is exchanged during cooling operation between the refrigerant flowing through the interior of the heat source side heat exchanger and the outdoor air. Namely, the heat source side heat exchanger functions as a condenser of the refrigerant. Thereby, an appropriate load of the heat source side heat exchanger can be calculated by detecting the outdoor air temperature and the condensation temperature of the heat source side heat exchanger.

In the refrigeration apparatus according to an aspect of the invention, in the heat source side heat exchanger, heat is exchanged during heating operation between the refrigerant flowing through the interior of the heat source side heat exchanger and the outdoor air. Namely, the heat source side heat exchanger functions as an evaporator of the refrigerant. Thereby, an appropriate load of the heat source side heat exchanger can be calculated by detecting the outdoor air temperature and the evaporation temperature of the heat source side heat exchanger.

In the refrigeration apparatus according to an aspect of the invention, the ventilation fan can be controlled in accordance with the situation.

### BRIEF DESCRIPTION OF THE DRAWINGS

**FIG. 1** is a system diagram of a refrigerant circuit of an air conditioner.
**FIG. 2** is a control block diagram of a control unit.
**FIG. 3** is a graph that shows the relationship between COP and a front wind speed of an outdoor fan.
**FIG. 4** is a graph that shows the relationship between an optimal COP front wind speed and the load.
**FIG. 5** is a flow chart that illustrates control of the outdoor fan of the air conditioner according to a first embodiment, wherein control is performed such that COP is optimized during cooling operation.
**FIG. 6** is a system diagram of the refrigerant circuit according to a modified example.
**FIG. 7** is a flow chart that illustrates control of the outdoor fan of the air conditioner according to a second embodiment.
**FIG. 8** is a graph that depicts the range of a permissible front wind speed.

### DESCRIPTION OF EMBODIMENTS

The embodiments of the present invention will now be explained, referencing the drawings.

### <First Embodiment>

### <Configuration of Air Conditioner 1>

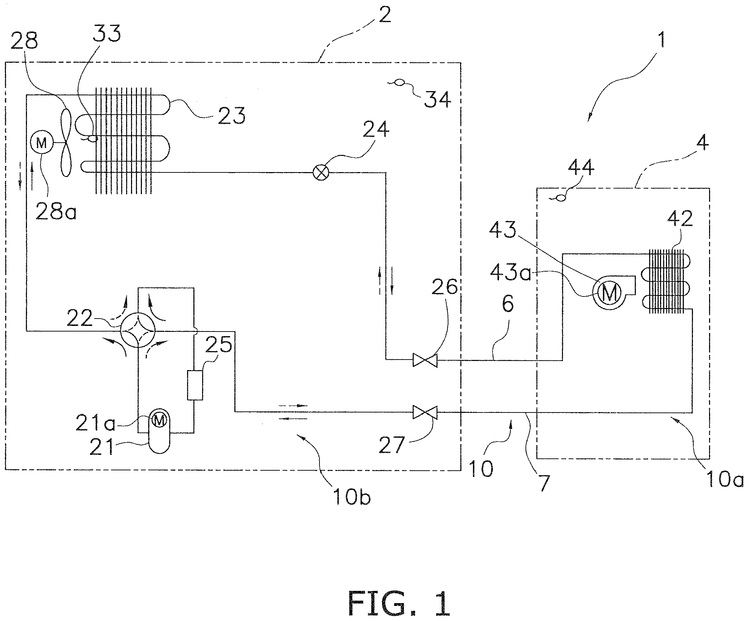

**FIG. 1** is a system diagram of a refrigerant circuit **10** of an air conditioner **1.**

The air conditioner **1** is a piece of equipment that is used to cool and heat an indoor space of a building by operating a vapor compression type refrigeration cycle. As shown in **FIG. 1****,** the air conditioner **1** principally comprises a single outdoor unit **2** that serves as a heat source unit, a single indoor unit **4** that serves as a utilization unit and is connected to the outdoor unit **2,** and a liquid side refrigerant connection piping **6** and a gas side refrigerant connection piping **7** that serve as refrigerant connection pipings that connect the outdoor unit **2** and the indoor unit **4.** Namely, a vapor compression type refrigerant circuit **10** of the air conditioner **1** is configured by the connection of the outdoor unit **2,** the indoor unit **4,** the liquid side refrigerant connection piping **6,** and the gas side refrigerant connection piping **7.**

### <Configuration of Indoor Unit 4>

First, the configuration of the indoor unit **4** will be explained.

The indoor unit **4** is installed either by embedding it in or suspending it from the ceiling of the indoor space of a building or by mounting it to a wall surface of the indoor space. The indoor unit **4** is connected to the outdoor unit **2** via the liquid side refrigerant connection piping **6** and the gas side refrigerant connection piping **7,** and constitutes part of the refrigerant circuit **10.**

The indoor unit **4** principally comprises an indoor side refrigerant circuit **10a,** which constitutes part of the refrigerant circuit **10.** The indoor side refrigerant circuit **10a** principally comprises an indoor heat exchanger **42,** which serves as a utilization side heat exchanger.

The indoor heat exchanger **42** is a cross fin type fin and tube heat exchanger that comprises a heat transfer pipe and numerous fins, and functions during the cooling operation as an evaporator of the refrigerant, thereby cooling the indoor air, and during the heating operation as a condenser of the refrigerant, thereby heating the indoor air.

In addition, the indoor unit **4** comprises an indoor fan **43,** which serves as a ventilation fan that sucks the indoor air into the indoor unit **4,** exchanges heat between that air and the refrigerant via the indoor heat exchanger **42,** and then supplies that air to the indoor space as supplied air. The indoor fan **43** is driven by a fan motor **43a** and is capable of varying the airflow of the air supplied to the indoor heat exchanger **42.**

In addition, an indoor temperature sensor **46,** which detects the temperature of the indoor air (i.e., the indoor temperature) that flows into the indoor unit **4,** is provided to the indoor air suction port side of the indoor unit **4.**

### <Configuration of Outdoor Unit 2>

Next, the configuration of the outdoor unit **2** will be explained.

The outdoor unit **2** is installed in the outdoor space outside of a building and is connected to the indoor unit **4** via the liquid side refrigerant connection piping **6** and the gas side refrigerant connection piping **7.** Furthermore, the refrigerant circuit **10** connects the outdoor unit **2** and the indoor unit **4.**

The outdoor unit **2** principally comprises an outdoor side refrigerant circuit **10b,** which constitutes part of the refrigerant circuit **10.** The outdoor side refrigerant circuit **10b** principally comprises: a compressor **21;** a four-way switching valve **22;** an outdoor heat exchanger **23,** which serves as a heat source heat exchanger; an outdoor expansion valve **24,** which serves as an expansion mechanism; an accumulator **25;** a liquid side shutoff valve **26;** and a gas side shutoff valve **27.**

The compressor **21** is capable of varying the operating capacity and is a displacement type compressor that is driven by a compressor motor **21a.**

The four-way switching valve **22** is for switching the flow direction of the refrigerant; during cooling operation, the four-way switching valve **22** connects a discharge side of the compressor **21** and a gas side of the outdoor heat exchanger **23** and connects a suction side of the compressor **21** (specifically, the accumulator **25**) and the gas side refrigerant connection piping **7** (refer to the solid lines of the four-way switching valve **22** in **FIG. 1****)** so that the outdoor heat exchanger **23** functions as a condenser of the refrigerant compressed by the compressor **21** and so that the indoor heat exchanger **42** functions as an evaporator of the refrigerant condensed in the outdoor heat exchanger **23.** In addition, during heating operation, the four-way switching valve **22** is capable of connecting the discharge side of the compressor **21** and the gas side refrigerant connection piping **7** and connecting the suction side of the compressor **21** and the gas side of the outdoor heat exchanger **23** (refer to the broken lines of the four-way switching valve **22** in **FIG. 1****)** so that the indoor heat exchanger **42** functions as an evaporator of the refrigerant compressed by the compressor **21.**

The outdoor heat exchanger **23** is a cross fin type fin and tube heat exchanger, which comprises heat transfer pipes and numerous fins. The outdoor heat exchanger **23** functions as a condenser of the refrigerant during cooling operation and as an evaporator of the refrigerant during heating operation. The gas side of the outdoor heat exchanger **23** is connected to the four-way switching valve **22,** and the liquid side is connected to the liquid side refrigerant connection piping **6.**

The outdoor expansion valve **24** is a motor operated expansion valve that is connected to the liquid side of the outdoor heat exchanger **23** and serves to regulate the pressure and flow volume of the refrigerant that flows through the interior of the outdoor side refrigerant circuit **10b.**

The outdoor unit **2** comprises an outdoor fan **28,** which is a ventilation fan for the purpose of sucking outdoor air into the outdoor unit **2,** exchanging heat between that air and the refrigerant via the outdoor heat exchanger **23,** and then discharging that air to the outdoor space. The outdoor fan **28** is capable of varying the amount of the outdoor air supplied to the outdoor heat exchanger **23,** and is a propeller fan that is driven by a fan motor **28a.** The fan motor **28a** is configured such that it is driven by receiving the supply of electric power via an inverter apparatus (not shown); furthermore, by varying the inverter frequency, which varies the fan rotational speed, the airflow of the outdoor fan **28** can be varied.

The accumulator **25** is a vessel that is connected to and disposed between the compressor **21** and the four-way switching valve **22** and is capable of accumulating surplus refrigerant generated inside the refrigerant circuit **10** in accordance with fluctuations in the operating load of the indoor unit **4.**

The liquid side shutoff valve **26** and the gas side shutoff valve **27** are provided to a connection port that connects to external equipment and piping (specifically, the liquid side refrigerant connection piping **6** and the gas side refrigerant connection piping **7**). The liquid side shutoff valve **26** is connected to the outdoor heat exchanger **23.** The gas side shutoff valve **27** is connected to the four-way switching valve **22.**

In addition, sensors **33, 34** are provided to the outdoor unit **2.** Specifically, a heat exchanging temperature sensor **33,** which serves as a heat exchanging temperature detecting means and detects the temperature of the refrigerant that flows through the interior of the outdoor heat exchanger **23** (i.e., the refrigerant temperature that corresponds to the condensing temperature during the cooling operation or the evaporating temperature during the heating operation), is provided to the outdoor heat exchanger **23.** In addition, an outdoor temperature sensor **34,** which serves as an outdoor air temperature detecting means that detects the temperature of the outdoor air (i.e., the outdoor temperature) that flows into the outdoor unit **2,** is provided to the outdoor air suction port side of the outdoor unit **2.**

### <Configuration of Liquid Side Refrigerant Connection Piping 6 and Gas Side Refrigerant Connection Piping 7>

The liquid side refrigerant connection piping **6** and the gas side refrigerant connection piping **7** are refrigerant pipings that are laid onsite when the air conditioner **1** is installed at an installation location inside a building; refrigerant pipings of various lengths and diameters are used for the pipings **6, 7** in accordance with the installation conditions such as the installation location and the particular combination of the outdoor unit **2** and indoor unit **4** to be configured.

### <Configuration of Control Unit 9 (Corresponds to Controlling Means)>

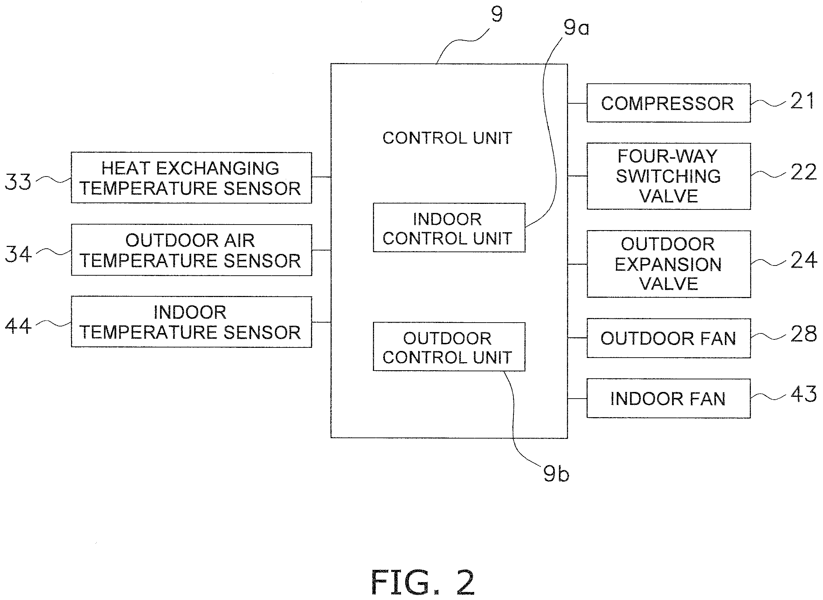

**FIG. 2** is a control block diagram of a control unit **9.**

As shown in **FIG. 2****,** the control unit **9** comprises an indoor control unit **9a** and an outdoor control unit **9b.** The indoor control unit **9a** and the outdoor control unit **9b** each comprise memory, a microcomputer. The indoor control unit **9a** controls the operation of the various equipment (specifically, the indoor fan **43**) that constitutes the indoor unit **4.** The outdoor control unit **9b** controls the operation of the various equipment (specifically, the compressor **21,** the outdoor fan **28,** and the like) that constitutes the outdoor unit **2.**

The indoor control unit **9a** is capable of transmitting control signals to and receiving control signals from a remote control (not shown), which is for separately operating the indoor unit **4.** In addition, the indoor control unit **9a** and the outdoor control unit **9b** are configured such that they can transmit control signals between and receive control signals from one another via a transmission line. Furthermore, the control unit **9,** which comprises the indoor control unit **9a** and the outdoor control unit **9b,** is connected to the sensors **33, 34, 46** such that the control unit **9** can receive detection signals therefrom and is configured such that it can control-based on these detection signals-the rotational speed of the indoor fan **43** and the outdoor fan **28,** the rotational speed of the compressor **21,** and the degree of opening of the outdoor expansion valve **24.**

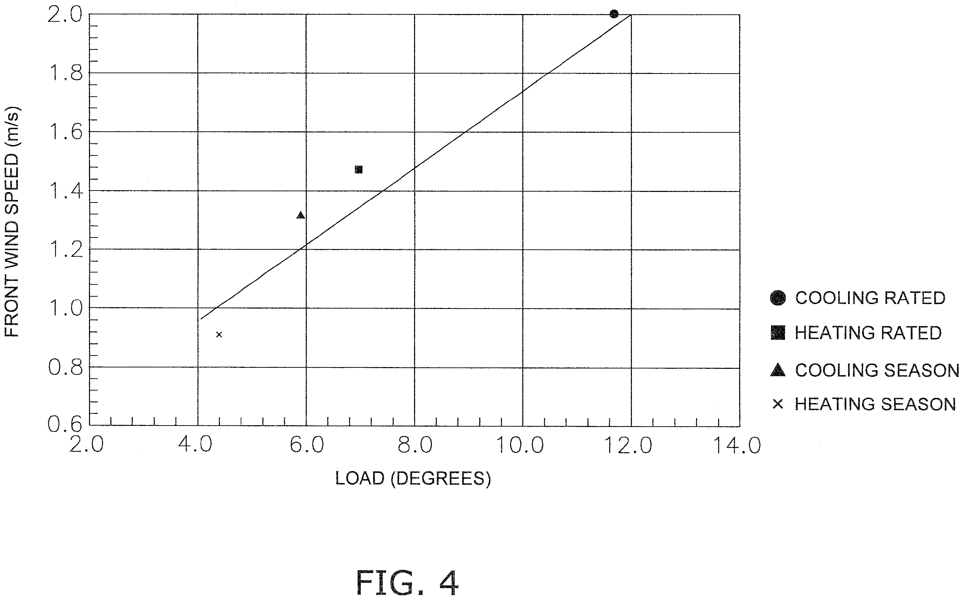

In addition, the control unit **9** stores a relational expression (hereinbelow, called a first relational expression) that describes the relationship between an optimal COP front wind speed (m/s) (i.e., the front wind speed of the outdoor fan **28** such that the COP of the air conditioner **1** is substantially optimized) of the outdoor fan **28** and a load as shown in **FIG. 4****.** Specifically, the first relational expression is *y* (m/s) = *ax* (degrees) + *b.* The front wind speed is the amount of ventilation of the outdoor fan **28** divided by the surface area of the outdoor heat exchanger **23.** The load is based on the difference between the outdoor air temperature detected by the outdoor air temperature sensor **34** and the temperature of the refrigerant (i.e., during cooling operation, the condensation temperature of the refrigerant flowing through the interior of the outdoor heat exchanger **23,** and, during heating operation, the evaporation temperature of the refrigerant flowing through the interior of the outdoor heat exchanger **23**) in the outdoor heat exchanger **23** detected by the heat exchanging temperature sensor **33.** Specifically, the load is calculated by subtracting the temperature of the refrigerant in the outdoor heat exchanger **23** from the outdoor air temperature.

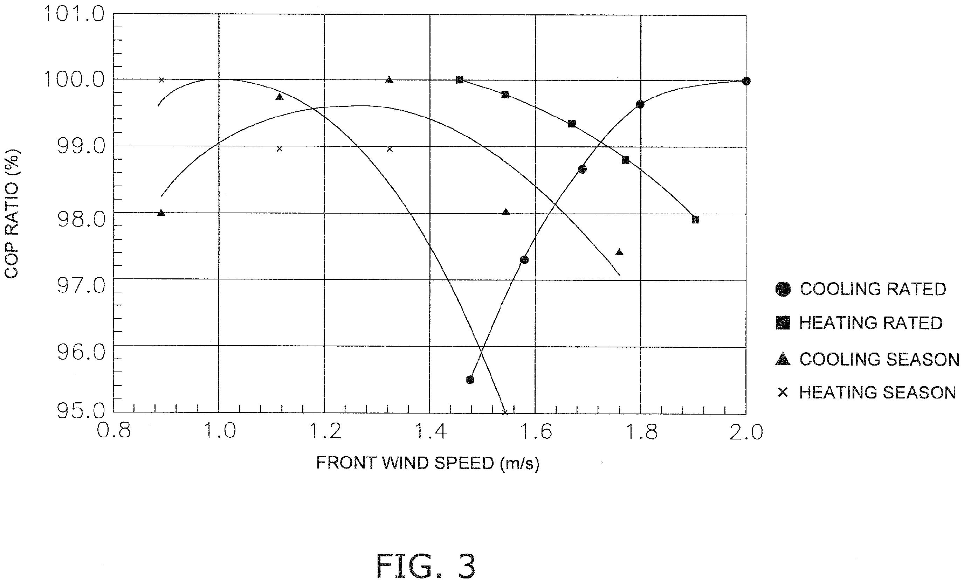

Here, **FIG. 3** is a graph that depicts the relationship between the COP ratio and the front wind speed of the outdoor fan **28** during cooling rated operation, during heating rated operation, during cooling season operation (e.g., during cooling operation, which is performed under the condition wherein the outdoor air temperature is in the range of 18°C-20°C), and during heating season operation (e.g., during heating operation, which is performed under the condition wherein the outdoor air temperature is in the range of 13°C-18°C) of the air conditioner **1.** The points shown in **FIG. 4** plot, for example, for each operation mode shown in **FIG. 3** (i.e., cooling rated operation, heating rated operation, cooling season operation, and heating season operation) and using the load as a parameter, the front wind speed of the outdoor fan **28** at which the COP ratio reaches 100% (i.e., 2.0 m/s during cooling rated operation, 1.46 m/s during heating rated operation, 1.32 m/s during cooling season operation, and 0.90 m/s during heating season operation). Furthermore, the first relational expression is derived by calculating the least squares of the plotted points.

Furthermore, because the first relational expression is derived based on the front wind speed, it is unaffected by the horsepower (i.e., the amount of electric power) of the air conditioner.

In addition, the control unit **9** stores a relational expression (a map), which is called a "second relational expression (map)" hereinbelow, that describes the relationship between the rotational speed (i.e., the amount of ventilation) of the outdoor fan **28** and the optimal COP front wind speed.

### <Operation of Air Conditioner 1>

The operation of the air conditioner **1** principally includes a state wherein the refrigerant circuit **10** is in a cooling cycle (i.e., the cooling operation state; in other words, the state illustrated by the solid lines of the four-way switching valve **22** in **FIG. 1**) and a state wherein the refrigerant circuit **10** is in a heating cycle (i.e., the heating operation state; in other words, the state illustrated by the broken lines of the four-way switching valve **22** in **FIG. 1**). Furthermore, the control unit **9** operates the air conditioner **1.**

Here, during ordinary cooling operation and heating operation, control is often performed such that the amount of ventilation of the outdoor fan is constant (e.g., control is performed such that the amount of ventilation of the outdoor fan is always maximal in order to cause a large amount of heat to be exchanged between the refrigerant and the outdoor air in the outdoor heat exchanger). However, if control is performed such that the amount of ventilation of the outdoor fan is always constant, then it is conceivable that there may be a case wherein COP is impacted (e.g., in a case wherein the load of the indoor unit is small, control is performed such that the amount of ventilation of the outdoor fan is always maximal).

However, taking energy conservation measures into consideration, it would be preferable for the COP of the air conditioner to be more suitable.

Moreover, for example, as shown in **FIG. 3****,** the front wind speed at which the COP is optimal is different for each of the four conditions, namely, during cooling rated operation, heating rated operation, cooling season operation, and heating season operation of the air conditioner **1.**

Thereby, it is supposed that, instead of performing control such that the amount of ventilation of the outdoor fan is always kept constant, it would be preferable to perform control wherein the amount of ventilation of the outdoor fan varies with the operating condition of the air conditioner.

Accordingly, in the present embodiment, control of the air conditioner **1** is performed as described below, such that the COP is substantially optimal even under different conditions.

### (1) Control During Cooling Operation of Air Conditioner 1

First, control of the air conditioner **1** during cooling operation will be explained, referencing **FIG. 1****.**

During cooling operation, control is performed such that the refrigerant circuit **10** transitions to the cooling cycle state (i.e., the state depicted by the solid lines of the four-way switching valve **22** shown in **FIG. 1**). Namely, control is performed such that a state obtains wherein the discharge side of the compressor **21** is connected to the gas side of the outdoor heat exchanger **23,** and the suction side of the compressor **21** is connected to the gas side of the indoor heat exchanger **42** via the gas side shutoff valve **27** and the gas side refrigerant connection piping **7.**

Furthermore, in this state, if the compressor **21,** the outdoor fan **28,** and the indoor fan **43** are driven, then the low pressure gas refrigerant is first suctioned into the compressor **21** where it is compressed and thereby transitions to high pressure gas refrigerant. Subsequently, this high pressure gas refrigerant transits the four-way switching valve **22** and is delivered to the outdoor heat exchanger **23.** In the outdoor heat exchanger **23,** the heat of this high pressure gas refrigerant is exchanged with the outdoor air supplied by the outdoor fan **28,** and then that refrigerant condenses and thereby transitions to high pressure liquid refrigerant. Furthermore, the outdoor expansion valve **24** reduces the pressure of the high pressure liquid refrigerant, which transitions to refrigerant in the low pressure vapor-liquid two-phase state and is delivered to the indoor unit **4** via the liquid side shutoff valve **26** and the liquid side refrigerant connection piping **6.** The refrigerant in the low pressure vapor-liquid two-phase state delivered to the indoor unit **4** is then delivered to the indoor heat exchanger **42;** the heat of that refrigerant is exchanged with the indoor air at the indoor heat exchanger **42,** and then that refrigerant evaporates and thereby transitions to low pressure gas refrigerant. This low pressure gas refrigerant is delivered to the outdoor unit **2** via the gas side refrigerant connection piping **7** and the gas side shutoff valve **27,** and then flows into the accumulator **25** via the four-way switching valve **22.** Furthermore, the low pressure gas refrigerant that flows into the accumulator **25** is once again sucked into the compressor **21.**

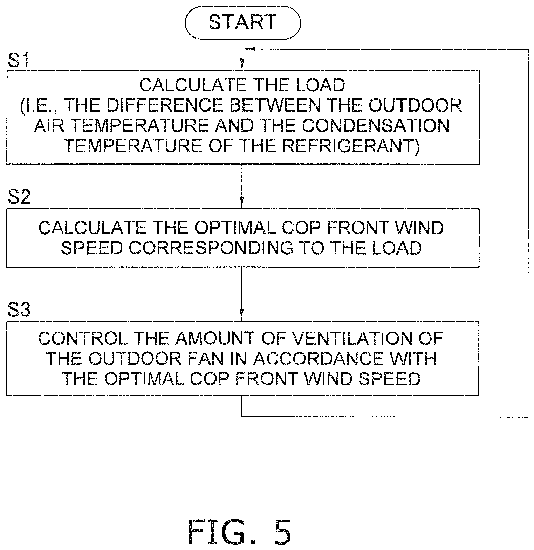

Furthermore, if the refrigerant circuit **10** is in an operation cycle (i.e., a cycle in a stable operation state) such that the indoor temperature detected by the indoor temperature sensor **44** reaches a set temperature set by a user via the remote control, then the amount of ventilation of the outdoor fan **28** is controlled such that the COP of the air conditioner **1** is always substantially optimal. Accordingly, control of the amount of ventilation of the outdoor fan **28** is performed by repetitively performing steps **S1-S3,** as shown in **FIG. 5****.** The steps **S1-S3** are explained below.

**FIG. 5** is a flow chart that illustrates control of the outdoor fan **28** wherein control is performed such that the COP is optimized.

In the step **S1,** the load (degrees) is calculated by subtracting the condensation temperature of the refrigerant in the outdoor heat exchanger **23** detected by the heat exchanging temperature sensor **33** from the outdoor air temperature detected by the outdoor air temperature sensor **34.**

In the step **S2,** the optimal COP front wind speed of the outdoor fan **28** is derived from the load calculated in the step **S1** based on the first relational expression.

In the step **S3,** the amount of ventilation of the outdoor fan **28** is controlled such that the front wind speed of the outdoor fan **28** reaches the optimal COP front wind speed calculated in the step **S2.** Namely, the control unit **9** uses the second relational expression (map) to determine a target rotational speed of the fan motor **28a** from the optimal COP front wind speed and controls the amount of ventilation of the outdoor fan **28** by inputting, to the fan motor **28a** via the inverter apparatus, the electric power of the frequency corresponding to the target rotational speed of the outdoor fan **28.**

### (2) Control During Heating Operation of Air Conditioner 1

Next, control of the air conditioner **1** during heating operation will be explained, referencing **FIG. 1****.**

During heating operation, control is performed such that the refrigerant circuit **10** transitions to the heating cycle state (i.e., the state depicted by the broken lines of the four-way switching valve **22** shown in **FIG. 1**). Namely, control is performed such that the state obtains wherein the discharge side of the compressor **21** is connected to the gas side of the indoor heat exchanger **42** via the gas side shutoff valve **27** and the gas side refrigerant connection piping **7,** and the suction side of the compressor **21** is connected to the gas side of the outdoor heat exchanger **23.**

Furthermore, in this state, if the compressor **21,** the outdoor fan **28,** and the indoor fan **43** are driven, then the low pressure gas refrigerant is suctioned into the compressor **21** where it is compressed and thereby transitions to high pressure gas refrigerant. This high pressure gas refrigerant is delivered to the indoor unit **4** via the four-way switching valve **22,** the gas side shutoff valve **27,** and the gas side refrigerant connection piping **7.** In the indoor heat exchanger **42,** the heat of the high pressure gas refrigerant delivered to the indoor unit **4** is exchanged with the indoor air supplied by the indoor fan **43,** and then that refrigerant is condensed and thereby transitions to high pressure liquid refrigerant. The high pressure liquid refrigerant is delivered to the outdoor unit **2** via the liquid side refrigerant connection piping **6** and the liquid side shutoff valve **26.** Furthermore, the pressure of the high pressure liquid refrigerant delivered to the outdoor unit **2** is reduced by the outdoor expansion valve **24,** and thereby that refrigerant transitions to refrigerant in a low pressure vapor-liquid two-phase state, after which it is delivered to the outdoor heat exchanger **23.** In the outdoor heat exchanger **23,** the heat of the liquid refrigerant in the low pressure vapor-liquid two-phase state is exchanged with the outdoor air supplied by the outdoor fan **28,** and then that refrigerant evaporates and thereby transitions to low pressure gas refrigerant. This low pressure gas refrigerant flows into the accumulator **25** via the four-way switching valve **22** and then once again is suctioned into the compressor **21.**

Furthermore, if the refrigerant circuit **10** transitions to an operation cycle (i.e., a cycle in a stable operation state) such that the indoor temperature detected by the indoor temperature sensor **46** reaches the set temperature set by the user via the remote control, then the amount of ventilation of the outdoor fan **28** is controlled even during heating operation, as during cooling operation, such that the COP of the air conditioner **1** is always substantially optimal. The control of the amount of ventilation of the outdoor fan **28** during heating operation and the control of the amount of ventilation of the outdoor fan **28** during cooling operation (refer to step **S1** through step **S3** in **FIG. 5**) are substantially the same, but differ in that, during heating operation, the load is calculated in the step **S1** by subtracting the evaporation temperature of the refrigerant in the outdoor heat exchanger **23** from the outdoor air temperature.

As described above, in the air conditioner **1,** the control unit **9** calculates the load based on the difference between the temperature of the refrigerant in the outdoor heat exchanger **23** and the outdoor air temperature, and performs control wherein the amount of ventilation of the outdoor fan **28** is matched to the optimal COP front wind speed of the outdoor fan **28** that was obtained using the first relational expression based on the load.

Thereby, even if the outdoor air temperature fluctuates owing to the installation conditions, the installation environment, and the like of the outdoor unit **2,** it is possible to control the amount of ventilation of the outdoor fan **28** more finely by calculating the load based on the difference between the outdoor air temperature and the temperature of the heat source side heat exchanger **23.** In addition, it is thereby possible to make the COP of the air conditioner **1** substantially optimal even under different operating conditions.

### <Characteristics of Air Conditioner 1 According to the First Embodiment>

In the conventional art, an air conditioner has been proposed wherein the airflow of an outdoor fan is controlled such that COP is made suitable based on the outdoor air temperature, as disclosed in Patent Document 1 (i.e., Japanese Unexamined Patent Application Publication No. H10-30853). In this air conditioner, control is performed such that the amount of ventilation of the outdoor fan is reduced when the outdoor air temperature is low. However, it is possible to imagine a case wherein the load (e.g., the load of an outdoor heat exchanger) is high even when the outdoor air temperature is low, and it would be preferable in such a case to increase the airflow of the outdoor fan. Here, examples of cases wherein the load is high even when the outdoor air temperature is low include the case wherein the outdoor environment wherein the outdoor unit is installed is, for example, in the midst of a typhoon or a rain and snow storm, as well as the case wherein the outdoor unit is installed outdoors such that a blow out port or a suction port is blocked by a wall or the like, thereby making it difficult for the outdoor heat exchanger to exchange heat.

Accordingly, in the present embodiment, the load is calculated taking into consideration not only the outdoor air temperature but also the temperature of the refrigerant in the outdoor heat exchanger **23** (i.e., during cooling operation, the condensation temperature of the refrigerant flowing through the interior of the outdoor heat exchanger **23,** and, during heating operation, the evaporation temperature of the refrigerant flowing through the interior of the outdoor heat exchanger **23**); specifically, the load is calculated by subtracting the temperature of the refrigerant in the outdoor heat exchanger **23** from the outdoor air temperature. Furthermore, the optimal COP front wind speed is calculated based on the load using the first relational expression, and the amount of ventilation of the outdoor fan **28** is controlled such that the optimal COP front wind speed is reached.

Thereby, calculating the load based on the two detection values, namely, the outdoor air temperature and the temperature of the refrigerant in the outdoor heat exchanger **23,** makes it possible to control the amount of ventilation of the outdoor fan **28** more finely.

In addition, as discussed above, the first relational expression calculates the optimal COP front wind speed of the outdoor fan **28** based on the graph of the COP ratio versus the amount of ventilation of the outdoor fan **28** under four principal conditions of the air conditioner **1,** namely, during cooling rated operation, heating rated operation, cooling season operation, and heating season operation, and thus generates the optimal COP front wind speed of the outdoor fan **28** using the load as a parameter.

Thereby, calculating the optimal COP front wind speed of the outdoor fan 28 based on the load using the first relational expression makes it possible to calculate the optimal COP front wind speed of the outdoor fan **28** corresponding to the load under each of the operating conditions.

Furthermore, performing the control as described above makes it possible for the COP of the air conditioner **1** to become substantially optimal.

### <Modified Example of Air Conditioner 1 According to the First Embodiment>

The above text explained an embodiment of the present invention based on the drawings, but the specific constitution is not limited to that embodiment, and it is understood that variations and modifications may be effected without departing from the spirit and scope of the invention.

### (A)

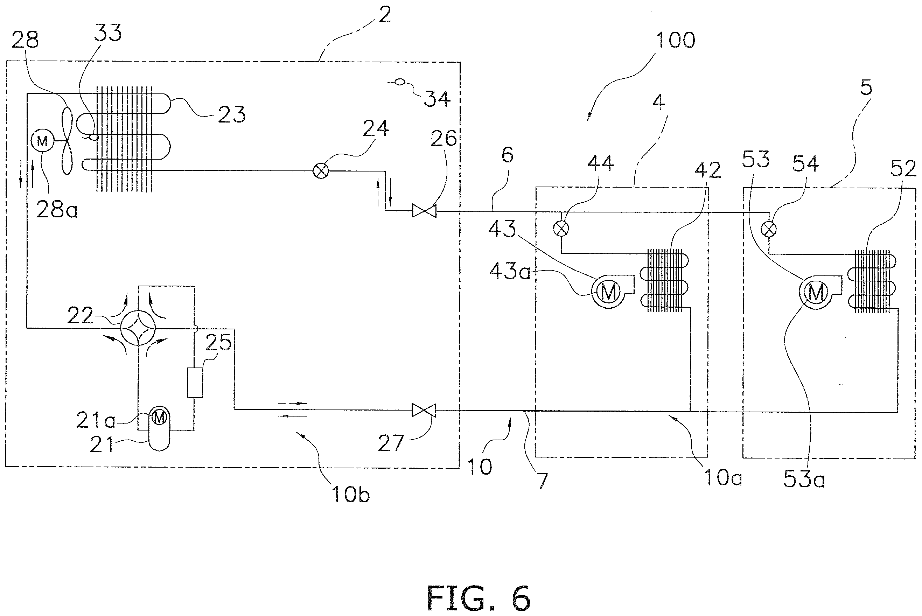

**FIG. 6** is a system diagram of the refrigerant circuit **10** according to a modified example (A).

The abovementioned embodiment recited a case limited to a so-called paired air conditioner **1,** wherein one indoor unit **4** is connected to one outdoor unit **2,** but the present invention is not limited thereto.

For example, as shown in **FIG. 6****,** the air conditioner may be a so-called multi-type air conditioner **100,** wherein a plurality of indoor units **4, 5, ..., *n*** is connected to one outdoor unit **2.**

In such a case, indoor expansion valves **44, 54, ..., *n4*** are provided to the indoor units **4, 5, ..., *n*** and are capable of regulation such that the refrigerant flows in accordance with the loads of the corresponding indoor units **4, 5, ..., *n*.** Furthermore, the symbols of the components of the indoor unit **5** shown in **FIG. 6** are the same as those of the components of the indoor unit **4,** except that numbers in the fifty series are used instead of numbers in the forty series.

### (B)

The abovementioned embodiment explained a case wherein the temperature of the refrigerant flowing through the interior of the outdoor heat exchanger **23** is detected by the heat exchanging temperature sensor **33,** which is provided to the outdoor heat exchanger **23,** but the present invention is not limited thereto.

For example, if a pressure sensor is provided to the outdoor heat exchanger **23,** then a value calculated by converting the refrigerant pressure detected by this pressure sensor to the saturation temperature of the refrigerant may be used as the temperature of the refrigerant.

### (C)

The abovementioned embodiment explained the case wherein the first relational expression is stored in the control unit **9,** but the present invention is not limited thereto; for example, a relationship map that describes the relationship between the optimal COP front wind speed (m/s) of the outdoor fan **28** and the load may be stored instead of the first relational expression.

### (D)

The abovementioned embodiment explained a case limited to the air conditioner **1,** but the present invention is not limited thereto. For example, the present invention may be adapted to a heat pump type hot water heater.

### (E)

In the abovementioned embodiment, the indoor temperature is detected by the indoor temperature sensor **46,** but the present invention is not limited thereto. For example, a suction temperature sensor (not shown) that detects the temperature of the suction air sucked into the indoor unit **4** may be provided instead of the indoor temperature sensor **46** to the indoor unit **4,** and the suction temperature detected by this suction temperature sensor may be used as the indoor temperature.

### <Second Embodiment>

A second embodiment will now be explained. Furthermore, components and the like identical to those in the first embodiment are assigned the same symbols, and explanations thereof are therefore omitted.

In simple terms, the second embodiment differs from the first embodiment as follows: in the first embodiment, the optimal COP front wind speed is calculated from the load based on the first relational expression, and the amount of ventilation of the outdoor fan **28** is controlled such that the optimal COP front wind speed is reached (hereinbelow, this control is called optimal wind speed control), whereas in the second embodiment, control other than optimal wind speed control may be performed in accordance with the situation.

Accordingly, if the amount of ventilation of the outdoor fan **28** is controlled in accordance with the optimal COP front wind speed (i.e., if optimal wind speed control is performed), then it is understood that the annual performance factor (APF) will also be substantially optimal. Namely, improving COP also improves APF. This applies likewise to the air conditioner **1** of the first embodiment.

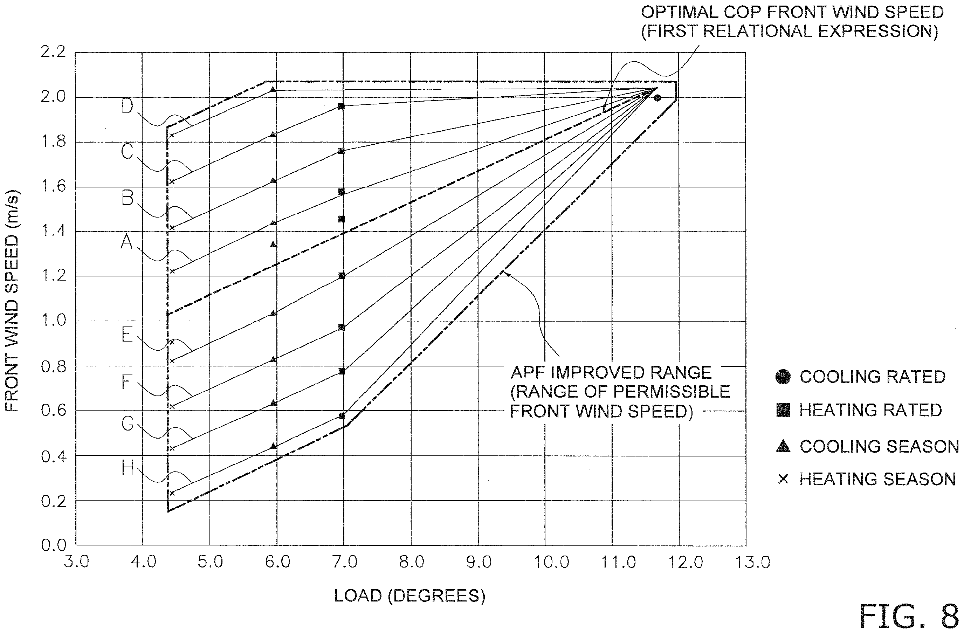

A permissible front wind speed is a front wind speed found in an APF improved range (which is the range enclosed by the chain double-dashed line shown in FIG.8). The APF improved range is the range over which the APF is improved compared with the case with the control often performed in the conventional art (specifically, control performed such that the amount of ventilation of the outdoor fan remains constant regardless of the load of the outdoor heat exchanger). Furthermore, in accordance with the situation, not only is optimal wind speed control performed, but the amount of ventilation of the outdoor fan **28** is controlled based on the permissible front wind speed. Furthermore, hereinbelow, the control of the amount of ventilation of the outdoor fan **28** based on the permissible front wind speed is called permissible wind speed control where appropriate.

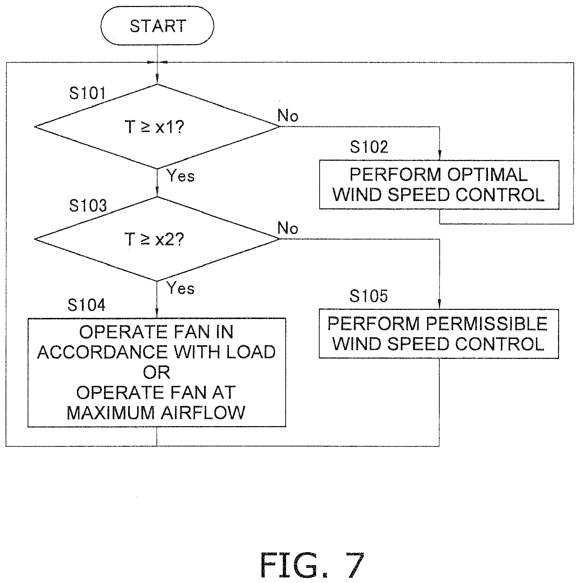

The text below explains the control of the outdoor fan **28** of the air conditioner **1** in the second embodiment, referencing **FIG.** 7. Furthermore, as in the first embodiment, it is understood that the following control is performed by the control unit **9.**

**FIG. 7** is a flow chart that illustrates the control of the outdoor fan **28** of the air conditioner **1** according to the second embodiment. **FIG. 8** is a graph that depicts the range of the permissible front wind speed.

First, as shown in a step **S101,** it is determined whether the divergence of the indoor temperature detected by the indoor temperature sensor **44** from the set temperature (i.e., the value calculated by subtracting the indoor temperature from the set temperature, as shown as *T* in the drawing) is greater than or equal to a first threshold value (i.e., a value indicated by *x1* in the drawing) stored in advance in the control unit **9.** If the divergence is greater than or equal to the first threshold value, then the method transitions to a step **S103;** if, on the other hand, the divergence is less than the first threshold value, then the method transitions to a step **S102**.

Furthermore, assuming that determination discussed above is performed, the control unit **9** acquires the following data: the set temperature and the indoor temperature.

In the step **S102,** as in the first embodiment, optimal wind speed control is performed.

Here, if the divergence of the indoor temperature from the set temperature is less than the first threshold value, then the air conditioning produced by the air conditioner **1** is assumed to support the comfort of the user, and therefore the outdoor fan **28** is controlled such that the energy conservation characteristic increases, namely, such that the substantially optimal COP/APF is obtained.

In the step **S103,** it is determined whether the divergence of the indoor temperature from the set temperature is greater than or equal to a second threshold value (i.e., a value indicated by *x2* in the drawing, wherein "second threshold value > first threshold value"), which is stored in advance in the control unit **9.** If the divergence is greater than or equal to the second threshold value, then the method transitions to a step **S104;** if, on the other hand, the divergence is less than the second threshold value, then the method transitions to a step **S105.**

In the step **S104,** it is determined that the divergence of the indoor temperature from the set temperature is large, and therefore the outdoor fan **28** is controlled in accordance with the load of the indoor unit **4** or control is performed such that the outdoor fan **28** is run at the maximum airflow (i.e., the maximum rotational speed). Namely, here, instead of performing control that considers COP/APF (i.e., control that considers the energy conservation characteristic), control that prioritizes the comfort of the user is performed.

In the step **S105,** first, the load is calculated based on the difference between the temperature of the refrigerant in the outdoor heat exchanger **23** and the outdoor air temperature. Furthermore, the permissible front wind speed of the outdoor fan **28** is calculated from the load using the graph in **FIG. 8****,** and the output of the outdoor fan **28** is controlled based on that permissible front wind speed. Furthermore, it is understood that the relational expression (map), which describes the relationship between the permissible front wind speed and the amount of ventilation (i.e., the rotational speed) of the outdoor fan **28,** is stored in advance in the control unit **9.**

Here, depending on how much of an APF is desirable, the permissible front wind speed of the outdoor fan **28** is varied. Thereby, in the second embodiment, a divergence-APF map, which describes the relationship between the APF and the divergence of the indoor temperature from the set temperature, is stored in advance in the control unit **9.** Furthermore, the APF is determined from the divergence based on the divergence-APF map, and the graph line of the permissible front wind speed at that APF is determined by selecting one of the graph lines from the plurality (in the present embodiment, eight) of the graph lines (i.e., the graph lines A-H). Furthermore, the permissible front wind speed is calculated from the load based on that permissible front wind speed graph line, and, as discussed above, the output of the outdoor fan **28** is controlled such that the calculated permissible front wind speed is reached.

To explain the process performed in the step **S105** more specifically, let us assume that, for example, the graph line of the permissible front wind speed at the APF that was determined based on the divergence of the indoor temperature from the set temperature is graph line "A." At this time, if the load is 6.0 (degrees), then the permissible front wind speed at which the load is 6.0 (degrees) on the "A" graph line is approximately 1.44 (m/s), and therefore the amount of ventilation of the outdoor fan **28** is controlled such that that permissible front wind speed is reached.

Furthermore, in **FIG. 8****,** APF is represented by (A, E) > (B, F) > (C, G) > (D, H). The (A, E), (B, F), (C, G), (D, H) graph in FIG.8 is the permissible front wind speed graph. The (A, E), (B, F), (C, G), (D, H) graph each is determined by adding the optimal COP front wind speed during heating season operation, during cooling season operation, and during heating rated operation to ±0.2 (m/s), ±0.4 (m/s), ±0.6 (m/s), ±0.8 (m/s), in the state wherein the optimal front wind speed is fixed. This graph can describe a relational expression; in one example, the A graph line describes the relational expression of *y* = *a1x* + *b1* when 4.4 ≤ *load* ≤ 7, and describes the relational expression of *y = a2x* + *b2* when 7 < *load.*

As described above, in the second embodiment, the control unit **9** calculates the difference between the indoor temperature and the set temperature, and, based on that difference, determines whether to perform control that prioritizes the substantially optimal energy conservation characteristic (i.e., optimal wind speed control) or control that considers the comfort of the user while maintaining a suitable energy conservation characteristic (i.e., permissible wind speed control), namely, control that increases the operating capacity of the air conditioner **1** more than optimal wind speed control does.

Thereby, if optimal wind speed control is performed, then the substantially optimal COP/APF is obtained; furthermore, if permissible wind speed control is performed, then COP/APF is not optimal but is still better than it would be were the amount of ventilation of the outdoor fan to be controlled without considering the load, as in the conventional art.

### <Characteristics of the Air Conditioner 1 According to the Second Embodiment>

In the second embodiment, optimal wind speed control is not performed in the same manner as in the first embodiment, taking into consideration various situations that might arise. Specifically, as discussed above, a certain condition is provided, and based on whether that condition is satisfied, it is determined whether to perform optimal wind speed control or permissible wind speed control (i.e., whether to perform control that prioritizes optimal energy conservation or control that considers also the comfort of the user while maintaining a suitable energy conservation). Namely, it is possible to control the outdoor fan **28** in accordance with the given situation. Thereby, if it is determined that the comfort of the user is not satisfied and increasing the operating capacity of the air conditioner **1** is therefore desired, then, by performing permissible wind speed control, it is possible to take the comfort of the user into consideration while obtaining a COP/APF that is better than that obtained in the conventional art.

### <Modified Example of the Air Conditioner 1 According to the Second Embodiment> (A)

In the abovementioned embodiment, if it is determined in the step **S101** in the flow chart of **FIG. 7** that the divergence of the indoor temperature from the set temperature is less than the first threshold value, then optimal wind speed control is performed in the step **S102;** however, the present invention is not limited thereto. For example, if the determination in the step **S101** is "no" and a determination process is further provided that determines whether the divergence of the indoor temperature from the set temperature is less than a third threshold value, then, based on the determination result of that determination process, it may be determined whether to perform optimal wind speed control or permissible wind speed control. Specifically, a control pattern may be adopted wherein, if the divergence is less than the third threshold value, then control may be performed such that the outdoor fan **28** is operated at the minimum airflow (i.e., the minimum rotational speed); furthermore, if the divergence is not less than the third threshold value, then optimal wind speed control may be performed. In addition, a control pattern may be adopted wherein, if the divergence is less than the third threshold value, then control is performed such that the outdoor fan **28** is operated at the minimum airflow (i.e., the minimum rotational speed); furthermore, if the divergence is not less than the third threshold value, then permissible wind speed control may be performed.

In this case, too, it is possible to obtain a COP/APF better than that obtained when control is performed such that the airflow of the outdoor fan **28** is held constant without taking the load into consideration.

### (B)

In the abovementioned embodiment, it is determined whether to perform optimal wind speed control or permissible wind speed control based on the divergence of the indoor temperature from the set temperature, but the present invention is not limited thereto. For example, it may be determined whether to perform optimal wind speed control or permissible wind speed control based on the frequency of the compressor **21.** In such a case, the divergence of the indoor temperature from the set temperature, which is what is to be determined in the step **S101** and the step **S103** in the flow chart of **FIG. 7****,** is replaced by the frequency of the compressor **21.** Furthermore, the first threshold value and the second threshold value are replaced by a fourth threshold value and a fifth threshold value (wherein "fourth threshold value < fifth threshold value") stored in advance in the control unit **9.**

To explain a case wherein the control of the outdoor fan **28** is determined based on the frequency of the compressor **21** more specifically, first, in the step **S101,** it is determined whether the frequency of the compressor **21** is higher than the fourth threshold value. If it is determined that the frequency of the compressor **21** is higher than the fourth threshold value, then it is determined that the load is high and, in the step **S103,** it is determined whether the frequency of the compressor **21** is higher than the fifth threshold value.

Furthermore, if it is determined that the frequency of the compressor **21** is not higher than the fourth threshold value, then, as discussed above, optimal wind speed control is performed in the step **S102.** In addition, in the step **S105,** if it is determined that the frequency of the compressor **21** is not higher than the fifth threshold value, then, as discussed above, permissible wind speed control is performed. In addition, if it is determined that the frequency of the compressor **21** is higher than the fifth threshold value, then, as discussed above, the process in the step **S104** is performed.

Furthermore, in this case, too, as discussed above, assuming that permissible wind speed control is performed in the step **S105,** the frequency of the compressor **21,** as well as the frequency-APF map, wherein the relationship to the APF is described, are stored in advance in the control unit **9.** Furthermore, in the step **S105,** the APF is determined from the frequency of the compressor **21** based on the frequency-APF map, and the graph line of the permissible front wind speed at that APF is selected from the graph lines (A-H) in **FIG. 8****.**

In addition, as discussed above, the determination of whether to perform optimal wind speed control or permissible wind speed control may be made based on the divergence of the indoor temperature from the set temperature and the frequency of the compressor **21.** Even in this case, effects equal to those described above are achieved.

### (C)

In the abovementioned embodiment, there are only eight graph lines of the permissible front wind speed, namely, A-H, but the present invention is not limited thereto and the number of graph lines may be greater than eight. In this case, it is possible to perform control wherein the APF is varied more finely.

### INDUSTRIAL APPLICABILITY

The present invention is useful because it enables control of the outdoor fan such that COP/APF improves even under different usage conditions.

### REFERENCE SIGNS LIST

**1** Air conditioner (refrigeration apparatus)
**9** Control unit (controlling means)
**10** Refrigerant circuit
**21** Compressor
**23** Outdoor heat exchanger (heat source side heat exchanger)
**24** Outdoor expansion valve (expansion mechanism)
**28** Outdoor fan (ventilation fan)
**33** Heat exchanging temperature sensor (heat exchanging temperature detecting means)
**34** Outdoor air temperature sensor (outdoor air temperature detecting means)
**42** Indoor heat exchanger (utilization side heat exchanger)
**100** Air conditioner (refrigeration apparatus)

## Claims

1. A refrigeration apparatus (1, 100), comprising:
a refrigerant circuit (10), which is configured by connecting a compressor (21), a heat source side heat exchanger (23), an expansion mechanism (24), and a utilization side heat exchanger (42), and is capable of reversible operation, that is, capable of operation in a cooling cycle and in a heating cycle;
a ventilation fan (28), which delivers outdoor air to the heat source side heat exchanger (23);
an outdoor air temperature detecting means (34), which detects a temperature of the outdoor air whose heat is exchanged with a refrigerant that flows through the heat source side heat exchanger (23);
a heat exchanging temperature detecting means (33), which detects the temperature of the heat source side heat exchanger (23); and
a controlling means (9) configured to calculate a load using the temperature of the outdoor air and the temperature of the heat source side heat exchanger (23) **characterized in that** the controlling means (9) is configured to derive an optimal COP output of the ventilation fan (28) at which the COP of the refrigeration apparatus is substantially optimized from a relational expression describing the relationship between the optimal COP output of the ventilation fan (28) and the load, and to control the amount of ventilation of the ventilation fan (28) such that the output of the ventilation fan reaches the optimal COP output.

2. A refrigeration apparatus (1, 100) according to claim 1, wherein
the controlling means (9) calculates the load based on a difference between the temperature of the outdoor air and the temperature of the heat source side heat exchanger (23).

3. A refrigeration apparatus (1, 100) according to claim 1, wherein
the controlling means (9) calculates the load by subtracting one temperature selected from the group consisting of the temperature of the outdoor air and the temperature of the heat source side heat exchanger (23) from the other.

4. A refrigeration apparatus (1, 100) according to any one claim of claim 1 through claim 3, wherein
the heat exchanging temperature detecting means (33) is a condensation temperature detecting means that detects a condensation temperature of the heat source side heat exchanger (23) in a state wherein the refrigerant circuit (10) is operating in the cooling cycle.

5. A refrigeration apparatus (1, 100) according to any one claim of claim 1 through claim 3, wherein
the heat exchanging temperature detecting means (33) is an evaporation temperature detecting means that detects an evaporation temperature of the heat source side heat exchanger (23) in a state wherein the refrigerant circuit (10) is operating in the heating cycle.

6. A refrigeration apparatus (1, 100) according to any one of the preceding claims, wherein
there are a plurality of the relational expressions; and
the controlling means (9) selects one of the relational expressions from the plurality of the relational expressions based on a divergence of the indoor temperature from the set temperature, and/or a frequency of the compressor (21), and calculates the amount of ventilation of the ventilation fan (28) based on the one relational expression.

## Patentansprüche

1. Kühlvorrichtung (1, 100), umfassend:
einen Kältemittelkreislauf (10), der konfiguriert wird, indem ein Kompressor (21), ein wärmequellenseitiger Wärmetauscher (23), ein Ausdehnungsmechanismus (24) und ein verwendungsseitiger Wärmetauscher (42) verbunden werden, und der zum reversiblen Betrieb imstande ist, d. h. zum Betrieb in einem Kühlzyklus und einem Erwärmungszyklus verwendet zu werden;
ein Belüftungsgebläse (28), das Außenluft zu dem wärmequellenseitigen Wärmetauscher (23) zuführt;
ein Außenlufttemperatur-Detektionsmittel (34), das eine Temperatur der Außenluft detektiert, deren Wärme mit einem Kältemittel ausgetauscht wird, das durch den wärmequellenseitigen Wärmetauscher (23) strömt;
ein Wärmetauschertemperatur-Detektionsmittel (33), das die Temperatur des wärmequellenseitigen Wärmetauschers (23) detektiert; und
ein Steuerungsmittel (9), das dazu konfiguriert ist, eine Last unter Verwendung der Temperatur der Außenluft und der Temperatur des wärmequellenseitigen Wärmetauschers (23) zu berechnen, **dadurch gekennzeichnet, dass** das Steuerungsmittel (9) dazu konfiguriert ist, einen optimalen COP-Ausgang des Belüftungsgebläses (28) abzuleiten, bei welchem der COP der Kühlvorrichtung im Wesentlichen optimiert ist, aus einem relationalen Ausdruck, der das Verhältnis zwischen dem optimalen COP-Ausgang des Belüftungsgebläses (28) und der Last beschreibt, und die Belüftungsmenge des Belüftungsgebläses (28) zu steuern, so dass der Ausgang des Belüftungsgebläses den optimalen COP-Ausgang erreicht.

2. Kühlvorrichtung (1, 100) nach Anspruch 1, wobei
das Steuerungsmittel (9) die Last auf der Basis einer Differenz zwischen der Temperatur der Außenluft und der Temperatur des wärmequellenseitigen Wärmetauschers (23) berechnet.

3. Kühlvorrichtung (1, 100) nach Anspruch 1, wobei
das Steuerungsmittel (9) die Last durch Subtrahieren einer Temperatur, die aus der Gruppe ausgewählt ist, die aus der Temperatur der Außenluft und der Temperatur des wärmequellenseitigen Wärmetauschers (23) besteht, von der anderen berechnet.

4. Kühlvorrichtung (1, 100) nach einem der Ansprüche 1 bis 3, wobei
das Wärmetauschertemperatur-Detektionsmittel (33) ein Kondensationstemperatur-Detektionsmittel ist, das eine Kondensationstemperatur des wärmequellenseitigen Wärmetauschers (23) in einem Zustand detektiert, wobei der Kältemittelkreislauf (10) im Kühlzyklus arbeitet.

5. Kühlvorrichtung (1, 100) nach einem von Anspruch 1 bis Anspruch 3, wobei
das Wärmetauschertemperatur-Detektionsmittel (33) ein Verdampfungstemperatur-Detektionsmittel ist, das eine Verdampfungstemperatur des wärmequellenseitigen Wärmetauschers (23) in einem Zustand detektiert, in welchem der Kältemittelkreislauf (10) im Erwärmungszyklus arbeitet.

6. Kühlvorrichtung (1, 100) nach einem der vorhergehenden Ansprüche, wobei
es eine Mehrzahl der relationalen Ausdrücke gibt; und
das Steuerungsmittel (9) einen der relationalen Ausdrücke aus der Mehrzahl der relationalen Ausdrücke auf der Basis einer Divergenz der Innentemperatur aus der eingestellten Temperatur und/oder einer Frequenz des Kompressors (21) auswählt und die Belüftungsmenge des Belüftungsgebläses (28) auf der Basis des einen relationalen Ausdrucks berechnet.

## Revendications

1. Dispositif de réfrigération (1, 100), comprenant :
un circuit de fluide frigorigène (10), qui est configuré en reliant un compresseur (21), un échangeur de chaleur côté source de chaleur (23), un mécanisme de détente (24), et un échangeur de chaleur côté utilisation (42), et est capable de fonctionner de façon réversible, à savoir est capable de fonctionner dans un cycle de refroidissement et dans un cycle de chauffage ;
un ventilateur (28), qui délivre de l'air externe à l'échangeur de chaleur côté source de chaleur (23) ;
un moyen de détection de température d'air externe (34), qui détecte une température de l'air externe dont la chaleur est échangée avec un fluide frigorigène qui circule à travers l'échangeur de chaleur côté source de chaleur (23) ;
un moyen de détection de température d'échange de chaleur (33), qui détecte la température de l'échangeur de chaleur côté source de chaleur (23) ; et
un moyen de commande (9) configuré pour calculer une charge en utilisant la température de l'air externe et la température de l'échangeur de chaleur côté source de chaleur (23), **caractérisé en ce que** le moyen de commande (9) est configuré pour déduire une sortie de coefficient de performance (COP) optimale du ventilateur (28) à laquelle le COP du dispositif de réfrigération est sensiblement optimisé à partir d'une expression relationnelle décrivant la relation entre la sortie de COP optimale du ventilateur (28) et la charge, et pour commander la quantité de ventilation du ventilateur (28) de sorte que la sortie du ventilateur atteigne la sortie de COP optimale.

2. Dispositif de réfrigération (1, 100) selon la revendication 1, dans lequel
le moyen de commande (9) calcule la charge sur la base d'une différence entre la température de l'air externe et la température de l'échangeur de chaleur côté source de chaleur (23).

3. Dispositif de réfrigération (1, 100) selon la revendication 1, dans lequel
le moyen de commande (9) calcule la charge en soustrayant une température, sélectionnée dans le groupe constitué de la température de l'air externe et de la température de l'échangeur de chaleur côté source de chaleur (23), de l'autre.

4. Dispositif de réfrigération (1, 100) selon l'une quelconque de la revendication 1 à la revendication 3, dans lequel
le moyen de détection de température d'échange de chaleur (33) est un moyen de détection de température de condensation qui détecte une température de condensation de l'échangeur de chaleur côté source de chaleur (23) dans un état dans lequel le circuit de fluide frigorigène (10) fonctionne dans le cycle de refroidissement.

5. Dispositif de réfrigération (1, 100) selon l'une quelconque de la revendication 1 à la revendication 3, dans lequel
le moyen de détection de température d'échange de chaleur (33) est un moyen de détection de température d'évaporation qui détecte une température d'évaporation de l'échangeur de chaleur côté source de chaleur (23) dans un état dans lequel le circuit de fluide frigorigène (10) fonctionne dans le cycle de chauffage.

6. Dispositif de réfrigération (1, 100) selon l'une quelconque des revendications précédentes, dans lequel
il existe une pluralité des expressions relationnelles ; et
le moyen de commande (9) sélectionne une des expressions relationnelles à partir de la pluralité des expressions relationnelles sur la base d'une divergence de la température interne par rapport à la température réglée, et/ou d'une fréquence du compresseur (21), et calcule la quantité de ventilation du ventilateur (28) sur la base de cette expression relationnelle.
